(19) Europäisches Patentamt / European Patent Office / Office européen des brevets

(11) **EP 2 640 538 B1**

(12) **EUROPEAN PATENT SPECIFICATION**

(45) Date of publication and mention of the grant of the patent:
**14.12.2016 Bulletin 2016/50**

(51) Int Cl.:
*B22F 7/04* (2006.01)  *C22C 1/04* (2006.01)
*C22C 9/02* (2006.01)  *F16C 9/00* (2006.01)
*F16C 33/12* (2006.01)  *F16C 33/20* (2006.01)
*F16J 1/02* (2006.01)  *F16J 9/26* (2006.01)

(21) Application number: **11779266.3**

(22) Date of filing: **12.10.2011**

(86) International application number:
**PCT/US2011/055876**

(87) International publication number:
**WO 2012/067735 (24.05.2012 Gazette 2012/21)**

(54) **WEAR RESISTANT LEAD FREE ALLOY SLIDING ELEMENT AND METHOD OF MAKING**

GLEITELEMENT AUS VERSCHLEISSFESTER BLEIFREIER LEGIERUNG UND HERSTELLUNGSVERFAHREN

ÉLÉMENT COULISSANT EN ALLIAGE SANS PLOMB RÉSISTANT À L'USURE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.11.2010 US 414471 P**
**31.05.2011 US 201161491568 P**

(43) Date of publication of application:
**25.09.2013 Bulletin 2013/39**

(73) Proprietor: **Federal-Mogul Corporation Southfield, MI 48033 (US)**

(72) Inventors:
• **ANDLER, Gerd**
  **18 Konigsbergerstrabe (DE)**
• **MEISTER, Daniel**
  **55246 Mainz-kostheim (DE)**

• **SCHMITT, Holger**
  **64319 Pfungstadt (DE)**
• **SAXTON, David**
  **Ann Arbor**
  **MI 48108 (US)**
• **TOTH, James, R.**
  **Ann Arbor**
  **MI 48103 (US)**

(74) Representative: **Mehler Achler Patentanwälte Partnerschaft mbB Bahnhofstraße 67 65185 Wiesbaden (DE)**

(56) References cited:
**EP-A1- 0 962 541      WO-A1-2009/017501
US-A1- 2008 159 671      US-A1- 2009 305 916**

**Description**

CROSS REFERENCE TO RELATED APPLICATION

This application claims priority to U.S. Provisional Patent Application Serial Nos. 61/414,471 filed November 17, 2010, and 61/491,568 filed May 31, 2011.

BACKGROUND OF THE INVENTION

1. Field of the Invention

This invention relates generally to sliding elements, such as bushings and bearings of internal combustion engines or vehicle transmissions, such as those including sintered powder metals, and methods of forming the same.

2. Related Art

Sliding elements, such as bushings and bearings of internal combustion engines, often include a powder metal copper (Cu) alloy bonded to a steel backing to journal a crankshaft or the like. The copper alloy provides a matrix and should provide a strong surface that can withstand the loads subjected on the sliding element in use. Such sliding elements should also exhibit suitable wear and seizure resistance, and for this purpose it is common to add a certain additional alloying constituents, such as lead (Pb) to the copper matrix. Lead provides wear resistance by acting as a lubricant to the sliding element surface. It is also common to add a thin coating of lead (Pb) or tin (Sn) to the surface to further enhance the wear and seizure resistance.

Due to environmental considerations, various substitutes for lead have been explored, such as bismuth (Bi). Bismuth can be pre-alloyed with the powder metal copper alloy in a controlled amount along with a controlled amount of phosphorus (P). The Cu-Bi-P powder metal can be sintered, and bonded to a steel backing to provide a steel-backed engine sliding element whose physical properties, such as wear and seizure resistance, are equal to or better than those of lead containing steel -backed engine sliding elements.

An engine sliding element constructed according to U.S. Patent 6,746,154 comprises an essentially lead-free powder metal base bonded to a steel backing. The powder metal base comprises 8.0 to 12.0 weight percent (wt. %) tin, 1.0 to less than 5.0 wt. % bismuth; and 0.03 to 0.8 wt. % phosphorous, with the balance essentially copper.

WO2009/017501 discloses lead free bushings which form a Sn-rich overlay as bearing surface.

However. a disadvantage of sliding elements formed according to the '154 patent is that a tin-based overplate cannot be effectively applied to the powder metal base. At low temperatures, such as temperatures lower than typical engine temperatures, the bismuth of the powder metal base diffuses into the tin-based overplate and forms a eutectic alloy of tin and bismuth, which weakens the sliding element.

SUMMARY OF THE INVENTION

One aspect of the invention provides a sliding element comprising a backing and a base disposed on the backing. The base includes in weight percent (wt. %) of the base, copper in an amount of 20.0 to 98.9 wt.%, tin in an amount of 0.1 to 15.0 wt. %, bismuth in an amount of 0.1 to 8.0 wt.% , and first hard particles in an amount of 0.2 to 5.0 wt.%. A tin overplate is disposed on the base. The tin overplate includes, in wt.% of the tin overplate, tin in an amount of at least 50.0 wt.%, copper in an amount of 1.0 to 10.0 wt.% and nickel in an amount up to 10.0 wt.%

Another aspect of the invention provides a method of forming a sliding element. The method includes providing a Cu-Sn-Bi alloy including copper, tin, and bismuth. The method next includes mixing the Cu-Sn-Bi alloy with first hard particles to form a base, wherein the base includes, in weight percent (wt.%) of the base (24), the copper in an amount of 20.0 to 98.9 wt.%, the tin in an amount of 0.1 to 15.0 wt.%, the bismuth in an amount of 0.1 to 8.0 wt.%, and the first hard particles in an amount of 0.2 to 5.0 wt.%. The method further includes disposing the base on a backing; and sintering the base and backing, and disposing a tin overplate on the base. The tin overplate includes, in wt.% of the tin overplate, tin in an amount of at least 50.0 wt.%, copper in an amount of 1.0 to 10.0 wt. % and nickel in an amount up to 10.0 wt.%.

The composition of the base is such that a tin overplate can be applied to the base, with minimal diffusion of the bismuth into the tin overplate. Thus, the lead-free sliding element provides excellent strength, wear resistance, and seizure during use in engine and vehicle transmission applications.

BRIEF DESCRIPTION OF THE DRAWINGS

Other advantages of the present invention will be readily appreciated, as the same becomes better understood by reference to the following detailed description when considered in connection with the accompanying drawings wherein:

Figure 1 is a schematic view of an engine sliding element, specifically a bushing, including a backing and a base according to one embodiment of the present invention;
Figure 1A is an enlarged fragmentary cross-sectional view of the sliding element of Figure 1 along line A;

Figure 2 is a schematic view of an engine sliding element, specifically a bearing, including the backing, the base, and a tin overplate according to another embodiment of the invention;

Figure 3 is a perspective view of a sliding element including the backing, the base, a nickel barrier layer, a tin-nickel intermediate layer, the tin overplate, and a flash coating, according to another embodiment of the invention;

Figure 4 is an enlarged fragmentary cross-sectional view of the sliding element including the backing, the base, the nickel barrier layer, and the tin overplate according to another embodiment of the invention;

Figure 5 is an enlarged fragmentary cross-sectional view of the sliding element including the backing, the base, the nickel barrier layer, the tin-nickel intermediate layer, and the tin overplate according to another embodiment of the invention;

Figures 6-20 include Scanning Electron Microscopy (SEM) images and Energy dispersive X-ray spectra (EDX) comparing the base of the present invention (LF-4) to a comparative material (LF-5), before and after heat treatment.

## DETAILED DESCRIPTION OF THE ENABLING EMBODIMENTS

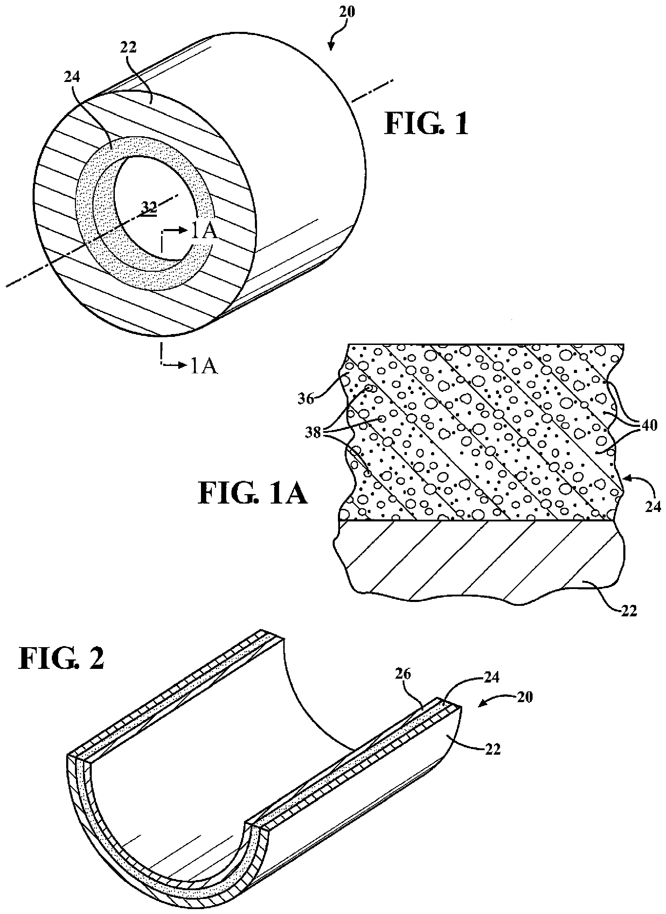

Referring to the Figures, wherein like numerals indicate corresponding parts throughout the several views, sliding element 20, such as a bushing or bearing, of an internal combustion engine is generally shown in Figure 1. The sliding element 20 of Figure 1 is a pin bushing such as those used in the small end opening of a connecting rod for journaling a wrist pin of a piston (not shown). The sliding element 20 includes a backing 22 and a base 24 disposed on the backing 22. The base 24 includes, in weight percent (wt. %) of the base 24, copper in an amount of 20.0 to 98.9 wt. %, tin in an amount of 0.1 to 15.0 wt. , bismuth in an amount of 0.1 to 8.0 wt. %, and first hard particles in an amount of 0.2 to 5.0 wt. %. As shown in Figures 2-7, a tin overplate 26, polymer coating 28, or sputter coating 30 is typically disposed on the base 24.

The description is made with reference to the sliding element 20, specifically the pin bushing of Figure 1, but it is to be understood that the sliding element 20 can be any type of bushing. Alternatively, the sliding element 20 can be a bearing, of any type, such as the type of Figure 2, including a half shell used in combination with a counterpart half shell (not shown) to journal a rotating shaft, such as a crankshaft of an engine (not shown). The description is applicable to all types of sliding elements 20, including all types of bushings and bearings of internal combustion engines.

The sliding element 20 includes the backing 22 presenting an inner surface having a concave profile and an oppositely facing outer surface having a convex profile. In one embodiment, the surfaces of the backing 22 each present a circumference extending 360 degrees around a center opening 32, as shown in Figure 1. When the sliding element 20 comprises a bearing, the surfaces extend between opposite ends, as shown in Figure 2. The backing 22 of the sliding element 20 typically has a thickness of 300 to 5000 microns extending from the inner surface to the outer surface. The backing 22 is typically formed of steel, such as plain carbon steel or alloyed steel. Thus, the backing 22 includes, in wt. % of the backing 22, iron in an amount of at least 80.0 wt. %, preferably at least 90.0 wt. %, or at least 98.0 wt. %.

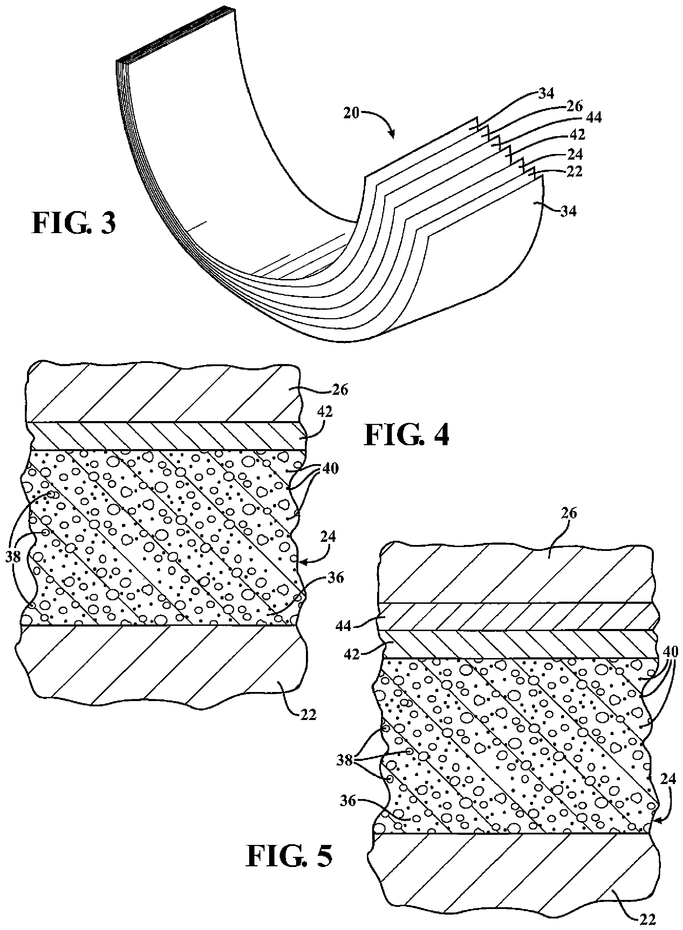

A flash coating 34 can be disposed on and continuously along the outer surface of the backing 22, as shown in Figure 3. The flash coating 34 presents an inner surface having a concave profile and an oppositely facing outer surface having a convex profile. The flash coating 34 typically has a thickness of 0.3 to 3.0 microns extending from the outer surface to the inner surface. The surfaces of the flash coating 34 each present a circumference extending 360 degrees around the center opening 32 and are radially aligned with the surfaces of the backing 22. The flash coating 34 includes, in wt. % of the flash coating 34, tin in an amount of at least 80.0 wt. %, preferably at least 85.0 wt. %, or at least 95.0 wt. %.

As shown in Figure 1, the base 24 is deposited on and continuously along the inner surface of the backing 22. The base 24 presents an inner surface having a concave profile and an oppositely facing outer surface having a convex profile. The base 24 typically has an thickness of 300 to 2000 microns extending from the inner surface to the outer surface, before use of the sliding element 20. The surfaces of the base 24 each present a circumference extending 360 degrees around the center opening 32 and are radially aligned with the surfaces of the backing 22.

As alluded to above, in one embodiment, the base 24 includes, in wt.% of the base 24, copper in an amount of at least 20.0 wt. %, or at least 70.0 wt. %, or at least 80.0 wt. %, based on the total weight of the base 24. In another embodiment, the base 24 includes the copper in an amount not greater than 98.9 wt. , or not greater than 97.0 wt. %, or not greater than 95.0 wt. %. In yet another embodiment, the base 24 includes the copper in an amount of 20.0 to 98.9 wt. %, or 70.0 to 97.0 wt. %, or 80.0 to 95.0 wt. %.

In one embodiment, the base 24 includes, in wt. % of the base 24, the tin in an amount of at least 0.1 wt. %, or at least 2.0 wt. %, or at least 3.5 wt. %, based on the total weight of the base 24. In another embodiment, the base 24 includes the tin in an amount not greater than 15.0 wt. %, or not greater than 12.0 wt. %, or not greater than 8.0 wt. %. In yet another embodiment, the base 24 includes the tin in an amount of 0.1 to 15.0 wt. %, or 2.0 to 12.0 wt. %, or 3.5 to 8.0 wt. %.

As alluded to above, in one embodiment, the base 24 includes, in wt. % of the base 24, bismuth in an amount of at least 0.1 wt. , or at least 0.5 wt. , or at least 2.0 wt. %, based on the total weight of the base 24. In another embodiment, the base 24 includes the bismuth in an amount not greater than 8.0 wt. %, or not greater than 7.0 wt. %, or not greater than 6.5 wt. %. In yet another embodiment, the base 24 includes the bismuth in an amount of 0.1 to 8.0 wt. %, or 0.5 to 7.0 wt. %, or 2.0 to 6.5 wt. %.

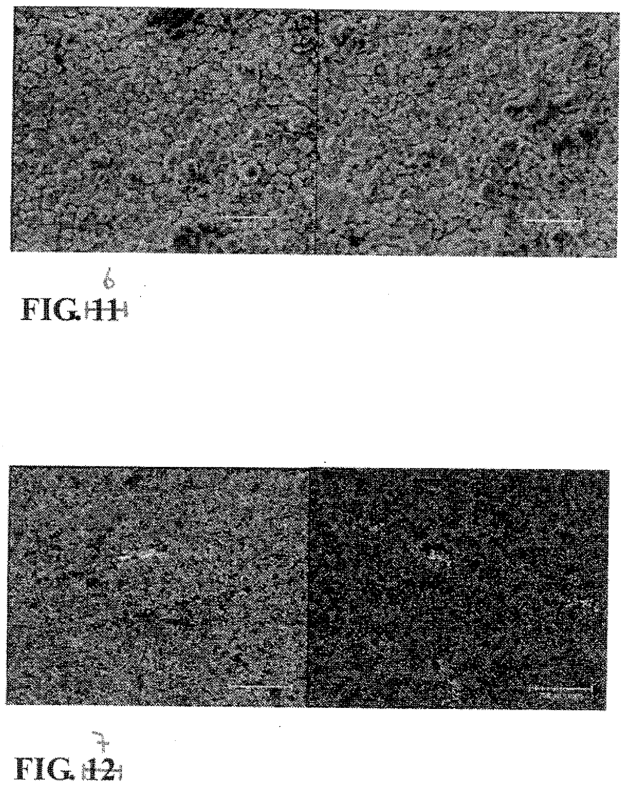

The composition of the base 24 can be detected by chemical analysis of the base 24, for example by means of Energy Dispersive X-ray (EDX) spectrography. The compositional variation within the base 24 can be observed and recorded in a Scanning Electron Microscopy (SEM) back-scatter electron photomicrograph, and features associated with various compositions may also be observed and recorded in an optical photomicrograph. The composition of the base 24 is measured after sintering and rolling the base 24, as discussed below. The finished base 24 typically includes a copper-based matrix 36 of the copper and tin, and islands 38 of the bismuth. The islands 38 of bismuth are preferably dispersed evenly throughout the copper-based matrix 36 and spaced from one another by the copper-based matrix 36, as shown in Figures 1A and 7A. The first hard particles 40 are also preferably distributed evenly throughout the copper-based matrix 36. The first hard particles 40 are typically spaced from one another and spaced from the islands 36 of bismuth by the copper-based matrix 36.

The method of forming the base typically includes providing copper, tin, and bismuth as a Cu-Sn-Bi alloy, so that the base 24 is formed from a pre-alloy, rather than pure elements of Cu, Sn, and Bi. In one embodiment, the Cu-Sn-Bi alloy includes, in wt. % of the Cu-Sn-Bi alloy, copper in an amount of at least 70.0 wt. %, tin in an amount of 0.1 to 15.0 wt. %, and bismuth in an amount of 1.0 to 8.0 wt. %.

The base 24 includes lead only as an unavoidable impurity, thus in an amount not greater than 0.5 wt. , preferably not greater than 0.1 wt. %, and most preferably 0 wt. %. Accordingly, the base 24 provides reduced health, safety, and environmental concerns, compared to sliding elements of the prior art including lead in an amount of 0.5 wt. % or greater. In one embodiment, such as for sliding elements 20 sold in Europe, the base 24 includes a maximum amount of lead of 0.1 wt. %.

As stated above, the base 24 also includes first hard particles 40, which are typically dispersed evenly throughout the copper-based matrix 36, as shown in Figure 1A. The first hard particles 40 have a hardness sufficient to affect at least one of the ductility, wear resistance, and strength of the base 24. In one embodiment, the first hard particles 40 comprise a material having a hardness of at least 600 HV 0.05, or at least 800 HV 0.05, or at least 850 HV 0.05 at a temperature of 25 °C.

The hardness of the material used to form the first hard particles 40 can be measured by a Vickers hardness test using a micro-hardness scale of HV 0.05, as described at Materials. Co. Uk Website. Vickers Hardness. http://www.materials.co.uk/vickers.htm. October 25, 2010. The hardness test using the HV 0.05 micro-hardness scale includes applying a force (F) of 0.4903 N to a test specimen formed of the material. The force is applied to the test specimen using a square-based pyramid diamond indenter including a 136° angle between opposite faces at the vertex. The force is applied for two seconds to eight seconds, and the force is maintained for 10 seconds to 15 seconds. Once the force is removed, the diagonal lengths of the indentation are measured and the arithmetic mean, d is calculated. The Vickers hardness number, HV, is determined by the following equation:

$$HV = Constant \times Test\ force\ /\ Surface\ area\ of\ Indentation$$

$$HV = 0.102 \times 2F\ [\sin(136° / 2)] / d^2$$

The first hard particles 40 also have a particle size sufficient to affect at least one of the ductility, wear resistance, and strength of the base 24. In one embodiment, the first hard particles 40 have a D50 particle size by volume not greater than 10.0 microns, or not greater than 8.0 microns, or not greater than 6.0 microns. The D50 particle size by volume is the equivalent spherical diameter of the first hard particles 40, also referred to as a D50 diameter, wherein 50.0 wt. %

of the first hard particles 40 have a larger equivalent spherical diameter and 50.0 wt. % of the first hard particles 40 have a smaller equivalent spherical diameter. The D50 diameter is determined from a particle size distribution display of the first hard particles 40, before any processing of the first hard particles 40. A Beckman- Coulter LS-230 laser scattering instrument can be used to obtain the particle size distribution and thus the D50 diameter of the first hard particles 40.

In one embodiment, the first hard particles 40 include a mixture of particle sizes, such as a first group of particles 50 having a smaller particle size than a second group of particles 52, as shown in Figure 7A. The first and second groups 50, 52 of the first hard particles 40 are typically dispersed evenly throughout the copper-based matrix 36.

In one embodiment, the first hard particles 40 include at least one of $Fe_3P$ and $MoSi_2$, and preferably a mixture of the $Fe_3P$ and $MoSi_2$. However, other compounds or mixtures having the hardness and particle size discussed above can be used in place of the Fe P and $MoSi_2$ or along with the Fe P and $MoSi_2$. Examples of other first hard particles 40 include metal borides, metal silicides, metal oxides, metal nitrides, metal carbides, metal phosphides, intermetallic compounds, metal oxynitrides, metal carbonitrides, metal oxycarbides, and mixtures thereof. Further, the first hard particles 40 described above can include nominal amounts of additional elements or impurities. The presence and composition of the first hard particles 40 can be detected by chemical analysis of the base 24, for example in by means of EDX spectrograph, or a SEM back-scatter electron photomicrograph, or an optical photomicrograph.

According to the invention the base 24 includes, in wt. % of the base 24, the first hard particles 40 in an amount of at least 0.2 wt. %, or at least 0.5 wt. %, at least 1.0 wt. %, based on the total weight of the base 24. In another embodiment, the base 24 includes the first hard particles 40 in an amount not greater than 5.0 wt. %, or not greater than 4.0 wt. %, or not greater than 3.5 wt. %. In yet another embodiment, the base 24 includes the first hard particles 40 in an amount of 0.2 to 5.0 wt. %, or 0.5 to 4.0 wt. %, or 1.0 to 3.5 wt. %. As the sliding element 20 includes the tin overplate 26, the first hard particles 40 are present in an amount sufficient to prevent diffusion of the bismuth of the base 24 into the tin of the tin overplate 26. Thus, the first hard particles 40 prevent formation of a eutectic alloy of tin and bismuth, and bismuth pools, which would weaken the sliding element 20.

In one embodiment, the first hard particles 40 include, in wt. % of the first hard particles 40, the Fe P in an amount of at least 90.0 wt. %, based on the total weight of the first hard particles 40. In another embodiment, the first hard particles 40 include the $MoSi_2$ in an amount of at least 90.0 wt. %. In yet another embodiment, the first hard particles 40 include a mixture of the $Fe_3P$ and the $MoSi_2$ in a total amount of at least 90.0 wt. %.

In one embodiment, the first hard particles 40 include, in wt. % of the first hard particles 40, the $Fe_3P$ in an amount of 40.0 to 60.0 wt. % and the $MoSi_2$ in an amount of 40.0 to 60.0 wt. %. In another embodiment, the first hard particles 40 include the $Fe_3P$ in an amount not greater than 70.0 wt. % and the $MoSi_2$ in an amount not greater than 70.0 wt. %.

The base 24 can include at least one additional metal, such as Ni, Fe,Zn, Al, Mg, Cr, Mn, Ti, Mo, Nb, Zr, Ag, Si, Be, and combinations thereof. The base 24 includes the additional metals in a total amount not greater than 50.0 wt. %, preferably not greater than 20.0 wt. %, based on the total weight of the base 24.

The base 24 is bonded to the backing 22 of the sliding element 20 according to methods discussed below. The base 24 has a closed porosity not greater than 1.5 % and a density of at least 8.668 $g/cm^3$. In one embodiment, the full theoretical density of the base 24 is 8.800 $g/cm^3$, and the density is 98.5 % of the full theoretical density. Thus, the base 24 provides the advantage of being substantially impervious to oil or other substances.

According to the invention the sliding element 20 includes the tin overplate 26 disposed on the base 24. The tin overplate 26 can be disposed directly on the base 24, or alternatively a nickel barrier layer 42 is disposed between the base 24 and the tin overplate 26.

In several embodiments, as shown in Figures 4 and 5, the nickel barrier layer 42 is disposed on and continuously along the inner surface of the base 24, between the base 24 and the tin overplate 26. The nickel barrier layer 42 presents an inner surface having a concave profile and an oppositely facing outer surface having a convex profile, with a thickness of 1.0 microns to 12.0 microns extending from the inner surface to the outer surface. The surfaces of the nickel barrier layer 42 each present a circumference extending 360 degrees around the center opening 32 and are radially aligned with the surfaces of the base 24. The nickel barrier layer 42 includes, in wt. % of the nickel barrier layer 42, nickel in an amount of at least 50.0 wt. %, and additional components in an amount not greater than 50.0 wt. %, the additional components including at least one of zinc, chromium, copper, and alloys thereof. The nickel barrier layer 42 can improve binding of the tin overplate 26 to the base 24 and can prevent diffusion of the copper from the base 24 to the tin overplate 26, and vice versa, during use of the sliding element 20.

The tin overplate 26 can be disposed on and continuously along the inner surface of the nickel barrier layer 42, as shown in Figure 4. The tin overplate 26 presents an inner surface having a concave profile and an oppositely facing outer surface having a convex profile. The tin overplate 26 has a thickness of 1.0 microns to 20.0 microns extending from the inner surface to the outer surface. In this embodiment, the tin overplate 26 provides a running surface for engaging a rotating shaft or pin (not shown). The surfaces of the tin overplate 26 each present a circumference extending 360 degrees around the center opening 32 and are radially aligned with the surfaces of the nickel barrier layer 42.

The tin overplate 26 preferably includes, in wt. % of the tin overplate 26, tin in an amount of at least 50.0 wt.

%. In one embodiment, the tin overplate 26 also includes copper in an amount of 1.0 to 10.0 wt. % and nickel in an amount up to 10.0 wt. %. In one preferred embodiment, the tin overplate 26 includes SnCu6 and is applied to the base 24 by an electroplating process. As stated above, the first hard particles 40 prevent diffusion of the bismuth of the base 24 into the tin of the tin overplate 26. Thus, the first hard particles 40 prevent formation of a eutectic alloy of tin and bismuth, and prevent formation of bismuth pools at the surface of the base 24 or in the tin overplate 26, which would weaken the sliding element 20.

In another embodiment, as shown in Figure 5, the sliding element 20 includes a tin-nickel intermediate layer 44 disposed on and continuously along the inner surface of the nickel barrier layer 42, between the inner surface of the nickel barrier layer 42 and the outer surface of the tin overplate 26. The tin-nickel intermediate layer 44 presents an inner surface having a concave profile and an oppositely facing outer surface having a convex profile, with a thickness of 5 to 15 microns extending from the inner surface to the outer surface. The surfaces of the tin-nickel intermediate layer 44 each present a circumference extending 360 degrees around the center opening 32 and are radially aligned with the surfaces of the base 24. In one embodiment, the tin-nickel intermediate layer 44 includes, in wt. % of the tin-nickel intermediate layer 44, nickel in an amount of at least 20.0 wt. % and tin in an amount of at least 50.0 wt. %. The tin-nickel intermediate layer 44 can also improve binding of the tin overplate 26 to the base 24 and can prevent diffusion of copper from the base 24 to the tin overplate 26, and vice versa, during use of the sliding element 20.

In yet another embodiment, as shown in Figure 3, the flash coating 34 discussed above is also disposed on and continuously along the inner surface of the tin overplate 26. In this embodiment, the flash coating 34 provides the running surface for engaging a rotating shaft or pin.

The invention also provides a method of forming the sliding element 20 described above. The method includes providing the backing 22, typically formed of steel, which can be prepared according to any method known in the art. The method also includes providing the base 24 in the form of a loose powder metal mixture of pure elements, compounds, or alloys. In one preferred embodiment, the copper, tin, and bismuth of the base 24 are pre-alloyed together and provided as an alloy of copper, tin, and bismuth. According to the invention the copper, tin, bismuth, and any additional powder metals of the base 24 are provided in the form of gas atomized powder, water atomized powder, or a mixture thereof. The copper, tin, and bismuth are mixed with the first hard particles 40, and any other elements or components, in the amounts described above.

The method next includes disposing or depositing the powder metal mixture on the backing 22. The powder metal mixture can be applied to the backing 22 according to any method known in the art. Preferably, the method includes cleaning the surfaces of the backing 22 before depositing the base 24 thereon. The method next includes heating and sintering the powder metal mixture deposited on the backing 22 to bond the base 24 to the backing 22. In one embodiment, the method also includes rolling the powder metal mixture deposited on the backing 22, after the heating and sintering step, to increase the strength and density of the sliding element 20, and the metallurgical bonding of the base 24 to the backing 22. The rolling step also decreases the porosity of the base 24.

After rolling the base 24 on the backing 22, the method typically includes a second heating step, including heating the base 24 and the backing 22 again for a time and temperature sufficient to promote inner diffusion within the base 24 at sites associated with the porosity, which was reduced during the rolling step. The second heating step increases the homogeneity of the micro structure of the base 24 and thus the strength of the base 24. The inner diffusion occurring during the second heating step also reduces microcracks that may be present throughout the base 24.

The method includes applying at least one of the additional layer or coating components discussed above to the base 24. Preferably, the method includes cleaning the surfaces of the backing 22 and base 24 before applying additional components to the base 24. In one embodiment, the method includes applying the tin overplate 26 to the base 24 after the heating and rolling steps. The step of applying the tin overplate 26 to the base 24 is also referred to as plating. The overplate 26 can be applied to the base 24 according to a variety of methods known in the art, such as electroplating; thermal coating, such as plasma spraying, high-speed flame spraying, and cold gas spraying; and PVD methods, such as sputtering.

In one preferred embodiment, the method includes applying the nickel barrier layer 42 to the base 24, and then applying the tin overplate 26 to the nickel barrier layer 42. In another embodiment, the method includes applying the nickel barrier layer 42 to the base 24, applying the tin-nickel intermediate layer 44 to the nickel barrier layer 42, and followed by applying the tin overplate 26 to the tin-nickel intermediate layer 44. In yet another embodiment, the method includes applying the flash coating 34 to the outer surface of the backing 22 or the inner surface of the tin overplate 26. The nickel barrier layer 42, tin-nickel intermediate layer 44, and flash coating 34 can be applied to the base 24 by a variety of methods known in the art, such as electroplating and sputtering.

As stated above, the invention provides a sliding element 20 that is lead-free and provides excellent strength and wear resistance compared to sliding elements of the prior art. The composition of the base 24 is such that diffusion of the bismuth into the tin overplate 26, nickel barrier layer 42, tin-nickel intermediate layer 44, sputter coating 30, or flash coating 34 is minimized. The combination of the base 24 and the polymer coating 28 also provides exceptional wear resistance and strength over time.

EXAMPLES

The following provides example sliding element 20 configurations, as well as example compositions of the base 24, the first hard particles 40, the tin overplate 26, and the nickel barrier layer 42 described above.

A first example sliding element 20 configuration includes the base 24, the nickel barrier layer 42 disposed on the base 24, and the tin overplate 26 disposed on the nickel barrier layer 42, as shown in Figure 4. A second example includes the base 24, the nickel barrier layer 42 disposed on the base 24, the tin-nickel intermediate layer 44 disposed on the nickel barrier layer 42, and the tin overplate 26 disposed on the tin-nickel intermediate layer 44, as shown in Figure 5.

The following tables provide example compositions of the base 24, the first hard particles 40 of the base 24, and the tin overplate 26, the nickel barrier layer 42 and the tin-nickel intermediate layer 44. Table 1 provides several example compositions of the base 24.

Table 1

|  | Cu (wt.%) | Bi (wt.%) | Sn (wt.%) | Fe$_3$P (wt.%) | MoSi$_2$ (wt.%) |
|---|---|---|---|---|---|
| Example 1 | 88.0 | 4.0 | 6.0 | 1.0 | 1.0 |
| Example 2 | 91.0 | 4.0 | 4.0 | 0.5 | 0.5 |

Table 2 provides an example composition of the first hard particles 40 of the base 24, wherein the first hard particles 40 include Fe P.

Table 2

|  | Fe (wt. %) | P (wt. %) | Si (wt. %) | Mn (wt. %) | C (wt. %) |
|---|---|---|---|---|---|
| Example 1 | 84.19 | 15.15 | 0.01 | 0.4 | 0.25 |

Table 3 provides an example composition of the first hard particles 40 of the base 24, wherein the first hard particles 40 include MoSi$_2$.

Table 3

|  | Mo (wt.%) | Si (wt.%) | C (wt.%) | O (wt.%) | N (wt.%) |
|---|---|---|---|---|---|
| Example 1 | 61.59 | 36.6 | 0.11 | 0.76 | 0.04 |

Table 4 provides several example compositions of the tin overplate 26.

Table 4

|  | Sn (wt.%) | Bi (wt.%) | Cu (wt.%) |
|---|---|---|---|
| Example 1 | 94.0 | 5.5 | 0.5 |
| Example 2 | 92.0 | 0.0 | 8.0 |
| Example 3 | 95.0 | 0.0 | 5.0 |

Table 5 provides several example compositions of the nickel barrier layer 42.

Table 5

|  | Ni (wt. %) | Cu (wt. %) | Cr (wt.%) |
|---|---|---|---|
| Example 1 | 90.0 | 5.0 | 5.0 |

(continued)

|  | Ni (wt. %) | Cu (wt. %) | Cr (wt.%) |
|---|---|---|---|
| Example | 100.0 | 0.0 | 0.0 |

EXPERIMENT - Evaluation of Inventive and Comparative Sliding elements

Samples of the inventive sliding element 20 and a comparative sliding element were prepared and analyzed. The inventive sliding element 20 included the base 24 having the composition of Table 1, Example 1, referred to herein as LF-4. The comparative sliding element included a base formed of a Cu-Sn-Bi powder prepared according to U.S. Patent No. 6,746,154, referred to herein as LF-5. Both sliding elements included the tin overplate 26 having the composition of Table 4, Example 4. The sliding elements were heat treated at 175° C for 309 hours in ambient atmosphere, cooled with an air cooldown, and then examined.

Figure 6 includes SEM images of the LF-4 (left) and LF-5 (right) surfaces, plated with the tin overplate 26 (not shown), before the heating and sintering steps.

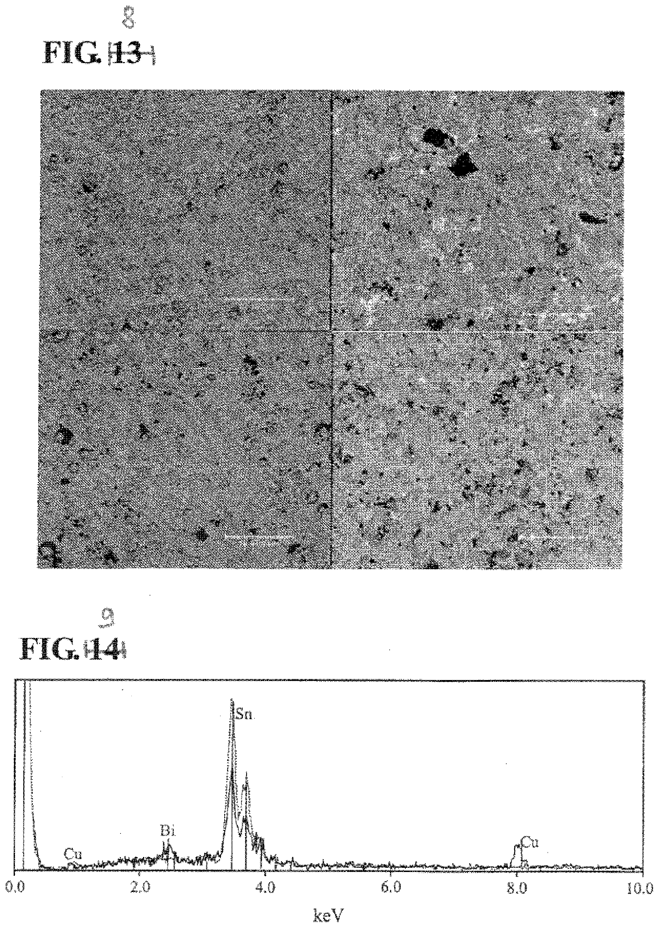

Both materials had a uniform layer of tin nodules. Figure 7 includes SEM images of the LF-4 surface (right) and LF-5 surface (left) of Figure 6 after heat treatment. The LF-5 included a white phase, indicating a prevalence of bismuth, which was not shown for the LF-4. Figure 8 includes higher magnification SEM images of the LF-4 (bottom) and LF-5 (top) of Figure 6 after heat treatment, which shows the LF-5 had significantly more bismuth on the surface than the LF-4.

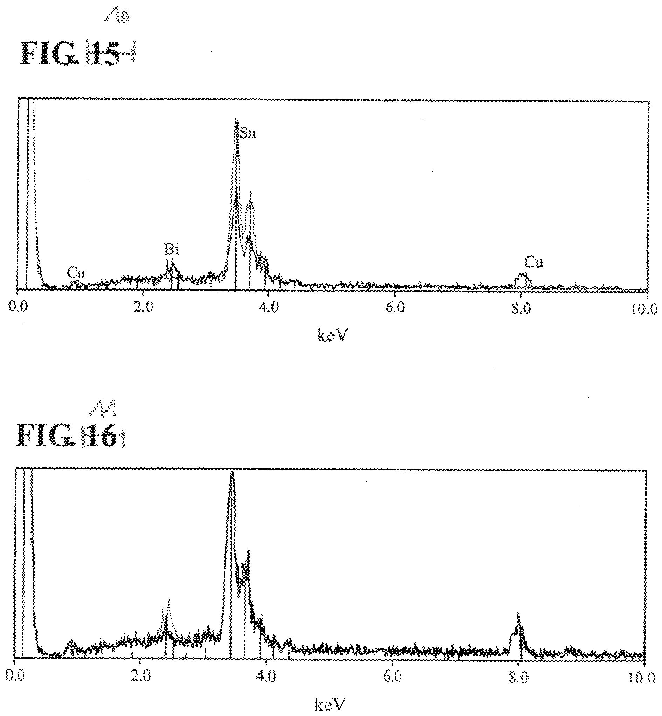

Figure 9 includes an Electron dispersive X-ray spectra (EDX) of LF-4 before heat treatment and after heat treatment. The EDX indicates the heating and sintering steps caused some copper of the base 24 to diffuse into the tin overplate 26 (not shown), but there is no bismuth peak after the heat treatment. Figure 10 includes an EDX of LF-5 before heat treatment and after heat treatment. The EDX indicates the heating and sintering steps caused some copper of the base 24 to diffuse into the tin overplate 26 (not shown). Figure 10 shows a distinct bismuth peak in LF-5 after the heat treatment. Figure 11 includes an EDX comparing LF-4 to LF-5 after heat treatment. Only the LF-5 had sufficient bismuth present to be detected on these relatively wide area spectra.

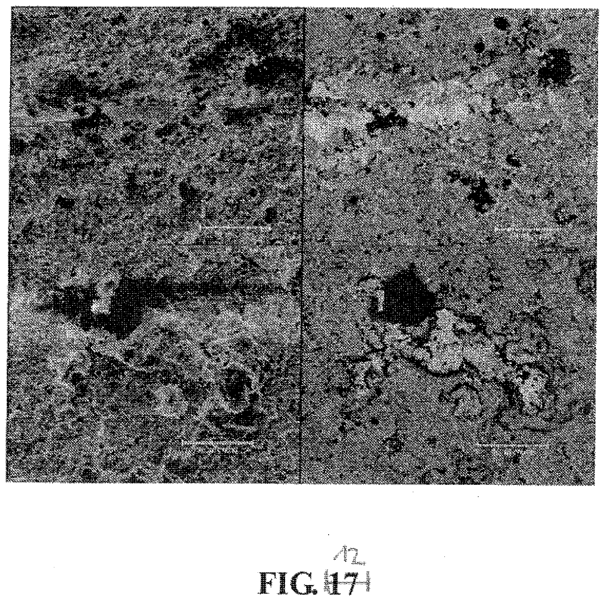

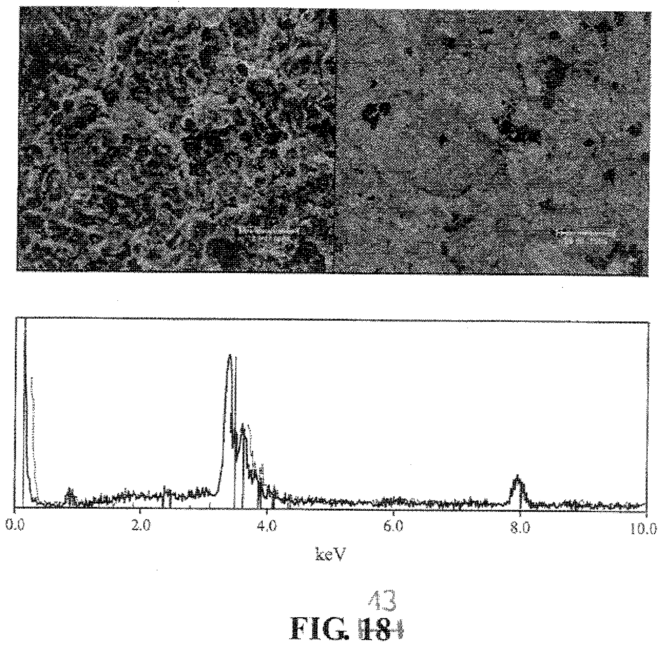

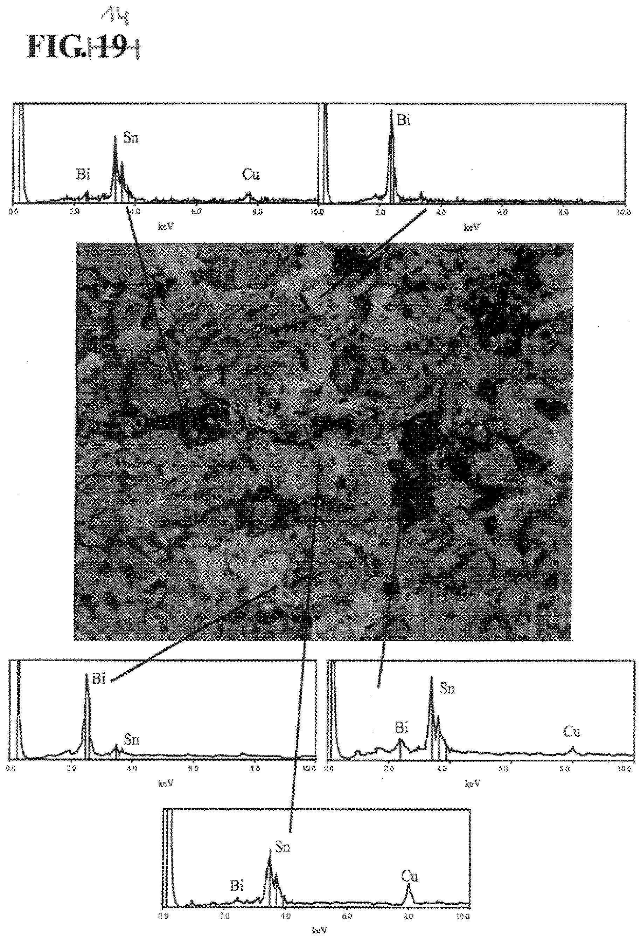

Figure 12 includes secondary images (left) and backscatter images (right) comparing the surfaces of LF-5 (top) and LF-4 (bottom) after heat treatment. Figure 12 shows a lower amount of bismuth was located at the surface of the LF-4 compared to LF-5. Figure 13 includes secondary images (top left) and backscatter images (top right) of a typical heat treated LF-4 surface, as well as an EDX spectrum (bottom) of the typical heat treated LF-4 surface, which indicates minimal bismuth. Figure 14 includes a backscatter image of the heat treated LF-5 surface and EDX spectrum at several locations of the LF-5. The EDX spectrum show various levels of bismuth and copper, depending on the location. Figures 13 and 14 indicate that most of the LF-4 surface was free of bismuth. The LF-5 by contrast had some level of bismuth present at every magnification, indicating a greater amount of bismuth at the surface.

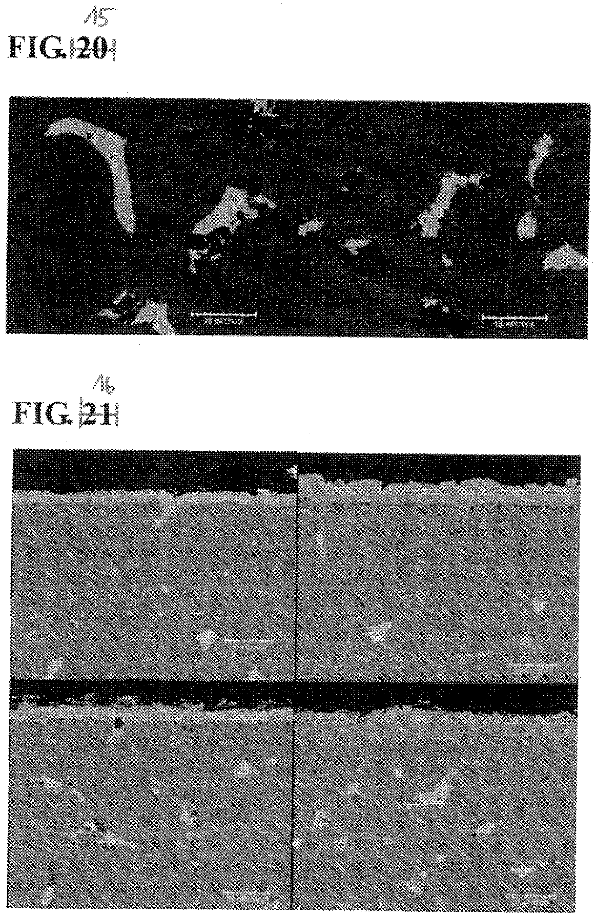

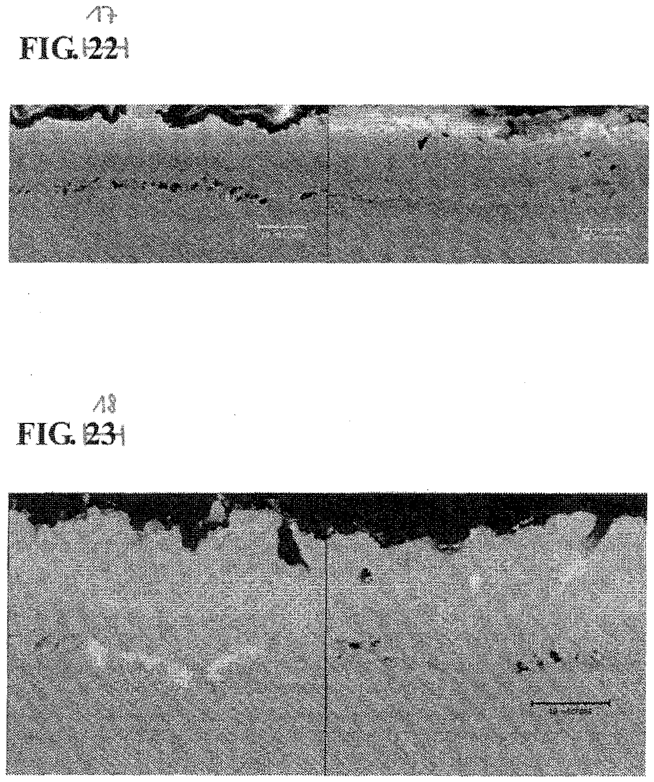

Figure 15 includes a cross sectional examination of the LF-4 before heat treatment (left) and after heat treatment (right). The images show very little difference in LF-4 after heat treatment. The images do not show the bismuth refinement typically seen on the heat treated LF-5. Figure 16 includes a cross sectional examination of the surface of the LF-4 (bottom) and LF-5 (top) before heat treatment (left) and after heat treatment (right). Both LF-4 and LF-5 developed two surface layers during the heat treatment. Figure 17 shows the LF-5 (left) developed a much more prevalent region of Kirkendall porosity between the base of the bottom surface layer material and the second surface layer compared to the LF-4 (right). Little or no bismuth was found in the top surface layer of the heat treated LF-4.

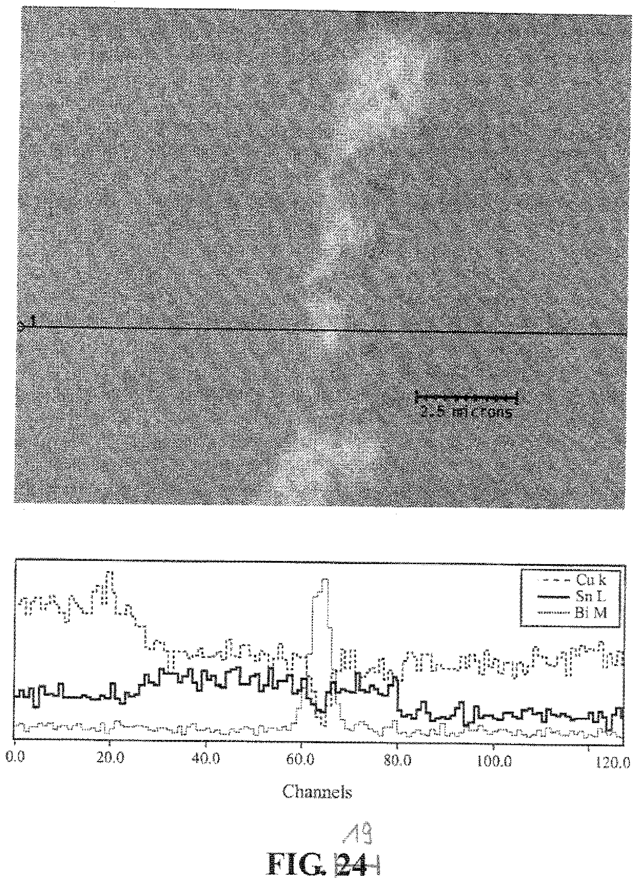

Figure 18 includes higher magnification backscatter images of the heat treated LF-4 (right) and LF-5 (left). The images of Figure 18 show white phases, indicating bismuth pools. Both surface layers of the heat treated LF-5 included bismuth pools, as well as porosity at the base of the second surface layer. The images also show lower amounts of bismuth pools and porosity in LF-4. Figure 19 includes an EDX line spectrum of the heat treated LF-5 across a line of bismuth and porosity showing comparable levels of copper and tin on both sides of the porosity.

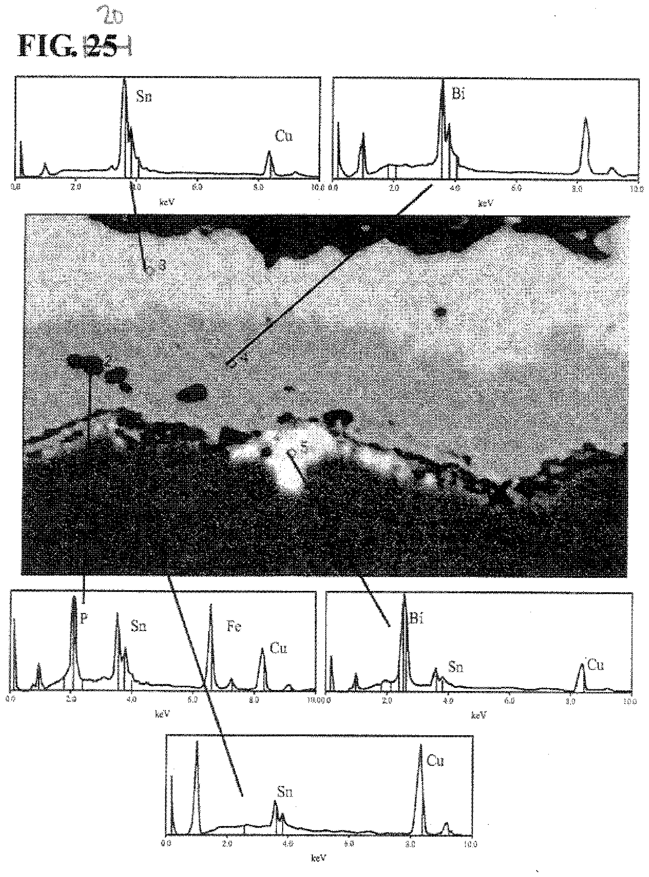

Figure 20 includes a higher magnification image of the LF-4 and EDX line spectrum at various locations of the heat treated LF-4. The spectrums show the top layer to be primarily tin with a small amount of bismuth, the second layer to be primarily copper with very high levels of tin, and the lowest layers to be copper with a much lower tin content. Figure 21 includes a very high magnification backscatter image of a portion of Figure 20, showing the low amount of bismuth (white phase), as well as distinct areas of copper and tin (dark phase).

Obviously, many modifications and variations of the present invention are possible in light of the above teachings. It is, therefore, to be understood that within the scope of the appended claims, the invention may be practiced otherwise than as specifically described. The invention is defined by the claims.

## Claims

1. A sliding element **(20)** comprising:

   a backing **(22),**
   a base **(24)** disposed on said backing **(22)** and including, in weight percent (wt. %) of said base **(24),** copper in an amount of 20.0 to 98.9 wt. %, tin in an amount of 0.1 to 15.0 wt. %, bismuth in an amount of 0.1 to 8.0 wt. %, and first hard particles **(40)** in an amount of 0.2 to 5.0 wt. %, and
   a tin overplate **(26)** disposed on said base **(24),** wherein said tin overplate **(26)** includes, in wt. % of said tin overplate **(26),** tin in an amount of at least 50.0 wt. %, copper in an amount of 1.0 to 10.0 wt. % and nickel in an amount up to 10.0 wt. %.

2. The sliding element **(20)** of claim 1 wherein said base **(24)** includes said copper in an amount of 80.0 wt. % to 95.0 wt. %, said tin in an amount of 3.0 to 10.0 wt. %, said bismuth in an amount of 0.5 to 7.0 wt. %, and said first hard particles **(40)** in an amount of 0.2 to 5.0 wt. %.

3. The sliding element **(20)** of claim 1 wherein said first hard particles **(40)** comprise a material having a hardness of at least 600 HV 0.05 at a temperature of 25° C and have a D50 particle size by volume not greater than 10 microns.

4. The sliding element **(20)** of claim 1 wherein said base **(24)** includes a copper-based matrix **(36)** of said copper and said tin, and islands **(38)** of said bismuth spaced from one another and from said first hard particles **(40)** by said copper-based matrix **(36).**

5. The sliding element **(20)** of claim 1 wherein said first hard particles **(40)** include at least one of $Fe_3P$ and $MoSi_2$.

6. The sliding element **(20)** of claim 1 wherein said tin overplate **(26)** includes, in wt. % of said overplate **(26),** said bismuth from said base **(24)** in an amount not greater than 0.1 wt. % during use of said sliding element **(20)** in an internal combustion engine.

7. The sliding element **(20)** of claim 1 further comprising a nickel barrier layer **(42)** between said base **(24)** and said tin overplate **(26),** said nickel barrier layer **(42)** including, in wt. % of said nickel barrier layer **(42),** nickel in an amount of at least 50.0 wt. %, and a tin-nickel intermediate layer **(44)** between said nickel barrier layer **(42)** and said tin overplate **(26),** said tin-nickel intermediate layer **(44)** including tin and nickel.

8. The sliding element **(20)** of claim 1 further comprising a flash coating **(34)** disposed on said tin overplate **(26),** said flash coating **(34)** including, in wt. % of said flash coating **(34),** tin in an amount of at least 80.0 wt. %.

9. A method of forming a sliding element **(20),** comprising the steps of: providing a Cu-Sn-Bi alloy including copper, tin, and bismuth; mixing the Cu-Sn-Bi alloy with first hard particles **(40)** to form a base **(24),** wherein the base **(24)** includes, in weight percent (wt. %) of the base **(24),** the copper in an amount of 20.0 to 98.9 wt. %, the tin in an amount of 0.1 to 15.0 wt. %, the bismuth in an amount of 0.1 to 8.0 wt. %, and the first hard particles (40) in an amount of 0.2 to 5.0 wt. %;

   disposing the base **(24)** on a backing **(22);**
   sintering the base **(24)** and backing **(22);** and
   disposing a tin overplate **(26)** on the base **(24),** wherein the tin overplate **(26)** includes, in wt. % of the tin overplate **(26),** tin in an amount of at least 50.0 wt. %, copper in an amount of 1.0 to 10.0 wt. % and nickel in an amount up to 10.0 wt. %.

## Patentansprüche

1. Gleitelement (20) mit:

   einem Trägermaterial (22),
   einer auf dem Trägermaterial (22) angeordneten Basis (24), die in Gewichtsprozent (Gew.-%) der Basis (24) aufweist: Kupfer in einer Menge von 20,0 bis 98,9 Gew.-%, Zinn in einer Menge von 0,1 bis 15,0 Gew.-%, Wismut in einer Menge von 0,1 bis 8,0 Gew.-% und erste Hartpartikel (40) in einer Menge von 0,2 bis 5,0 Gew.-

%; und

einem auf der Basis (24) angeordneten Zinnüberzug (26), wobei der Zinnüberzug (26) in Gew.-% des Zinnüberzugs (26) aufweist: Zinn in einer Menge von mindestens 50,0 Gew.-%, Kupfer in einer Menge von 1,0 bis 10,0 Gew.-% und Nickel in einer Menge von bis zu 10,0 Gew.-%.

2. Gleitelement (20) nach Anspruch 1, wobei die Basis (24) das Kupfer in einer Menge von 80,0 Gew.-% bis 95,0 Gew.-%, das Zinn in einer Menge von 3,0 bis 10,0 Gew.-%, das Wismut in einer Menge von 0,5 bis 7,0 Gew.-% und die ersten Hartpartikel (40) in einer Menge von 0,2 bis 5,0 Gew.-% aufweist.

3. Gleitelement (20) nach Anspruch 1, wobei die ersten Hartpartikel (40) ein Material mit einer Härte von mindestens 600 HV 0,05 bei einer Temperatur von 25°C aufweisen und eine auf das Volumen bezogene D50-Partikelgröße von nicht mehr als 10 $\mu$m haben.

4. Gleitelement (20) nach Anspruch 1, wobei die Basis (24) eine Matrix (36) auf Kupferbasis aus dem Kupfer und dem Zinn und Inseln (38) des Wismuts aufweist, die durch die Matrix (36) auf Kupferbasis voneinander und von den ersten Hartpartikeln (40) beabstandet sind.

5. Gleitelement (20) nach Anspruch 1, wobei die ersten Hartpartikel (40) $Fe_3P$ und/oder $MoSi_2$ enthalten.

6. Gleitelement (20) nach Anspruch 1, wobei der Zinnüberzug (26) bei Verwendung des Gleitelements (20) in einem Verbrennungsmotor in Gew.-% des Überzugs (26) das Wismut von der Basis (24) in einer Menge von nicht mehr als 0,1 Gew.-% aufweist.

7. Gleitelement (20) nach Anspruch 1, ferner mit einer Nickelbarriereschicht (42) zwischen der Basis (24) und dem Zinnüberzug (26), wobei die Nickelbarriereschicht (42) in Gew.-% der Nickelbarriereschicht Nickel in einer Menge von mindestens 50,0 Gew.-% aufweist, und mit einer Zinn-Nickel-Zwischenschicht (44) zwischen der Nickelbarriereschicht (42) und dem Zinnüberzug (26), wobei die Zinn-Nickel-Zwischenschicht (44) Zinn und Nickel enthält.

8. Gleitelement (20) nach Anspruch 1, ferner mit einer auf dem Zinnüberzug (26) angeordneten Flash-Beschichtung (34), wobei die Flash-Beschichtung (34) in Gew.-% der Flash-Beschichtung (34) Zinn in einer Menge von mindestens 80,0 Gew.-% aufweist.

9. Verfahren zum Ausbilden eines Gleitelementes (20), mit den Schritten:

Bereitstellen einer Cu-Sn-Bi-Legierung, die Kupfer, Zinn und Wismut enthält;
Mischen der Cu-Sn-Bi-Legierung mit ersten Hartpartikeln (40), um eine Basis (24) auszubilden, wobei die Basis (24) in Gew.-% der Basis (24) das Kupfer in einer Menge von 20,0 bis 98,9 Gew.-%, das Zinn in einer Menge von 0,1 bis 15,0 Gew.-%, das Wismut in einer Menge von 0,1 bis 8,0 Gew.-% und die ersten Hartpartikel (40) in einer Menge von 0,2 bis 5,0 Gew.-% aufweist;
Anordnen der Basis (24) auf einem Trägermaterial (22);
Sintern der Basis (24) und des Trägermaterials (22); und
Anordnen eines Zinnüberzugs (26) auf der Basis (24), wobei der Zinnüberzug (26) in Gew.-% des Zinnüberzugs (26) aufweist: Zinn in einer Menge von mindestens 50,0 Gew.-%, Kupfer in einer Menge von 1,0 bis 10,0 Gew.-% und Nickel in einer Menge von bis zu 10,0 Gew.-%.

**Revendications**

1. Elément coulissant (20) comprenant :

un support (22),
une base (24) disposée sur ledit support (22) et incluant, en pourcentage massique(% massique) de ladite base (24), du cuivre en une quantité de 20,0 à 98,9 % massique, de l'étain en une quantité de 0,1 à 15,0 % massique, du bismuth en une quantité de 0,1 à 8,0 % massique, et des premières particules dures (40) en une quantité de 0,2 à 5,0 % massique, et
un surdépôt d'étain (26) disposé sur ladite base (24), dans lequel ledit surdépôt d'étain (26) inclut, en % massique dudit surdépôt d'étain (26), de l'étain en une quantité d'au moins 50,0 % massique, du cuivre en une quantité de 1,0 à 10,0 % massique et du nickel en une quantité allant jusqu'à 10,0 % massique.

**2.** Elément coulissant (20) selon la revendication 1, dans lequel ladite base (24) inclut ledit cuivre en une quantité de 80,0 % massique à 95,0 % massique, ledit étain en une quantité de 3,0 à 10,0 % massique, ledit bismuth en une quantité de 0,5 à 7,0 % massique, et lesdites premières particules dures (40) en une quantité de 0,2 à 5,0 % massique.

**3.** Elément coulissant (20) selon la revendication 1, dans lequel lesdites premières particules dures (40) comprennent un matériau présentant une dureté d'au moins 600 HV 0,05 à une température de 25 °C et présentent une taille de particules D50 par volume non supérieure à 10 microns.

**4.** Elément coulissant (20) selon la revendication 1, dans lequel ladite base (24) inclut une matrice à base de cuivre (36) dudit cuivre et dudit étain, et des îlots (38) dudit bismuth espacés les uns des autres et desdites premières particules dures (40) par ladite matrice à base de cuivre (36).

**5.** Elément coulissant (20) selon la revendication 1, dans lequel lesdites premières particules dures (40) incluent au moins l'un parmi $Fe_3P$ et $MoSi_2$.

**6.** Elément coulissant (20) selon la revendication 1, dans lequel ledit surdépôt d'étain (26) inclut, en % massique dudit surdépôt (26), ledit bismuth de ladite base (24) en une quantité non supérieure à 0,1 % massique pendant l'utilisation dudit élément coulissant (20) dans un moteur à combustion interne.

**7.** Elément coulissant (20) selon la revendication 1, comprenant en outre une couche barrière de nickel (42) entre ladite base (24) et ledit surdépôt d'étain (26), ladite couche barrière de nickel (42) incluant, en % massique de ladite couche barrière de nickel (42), du nickel en une quantité d'au moins 50,0 % massique, et une couche intermédiaire d'étain-nickel (44) entre ladite couche barrière de nickel (42) et ledit surdépôt d'étain (26), ladite couche intermédiaire d'étain-nickel (44) incluant de l'étain et du nickel.

**8.** Elément coulissant (20) selon la revendication 1, comprenant en outre un revêtement flash (34) disposé sur ledit surdépôt d'étain (26), ledit revêtement flash (34) incluant, en % massique dudit revêtement flash (34), de l'étain en une quantité d'au moins 80,0 % massique.

**9.** Procédé de formation d'un élément coulissant (20), comprenant les étapes : de fourniture d'un alliage de Cu-Sn-Bi incluant du cuivre, de l'étain et du bismuth ; de mélange de l'alliage de Cu-Sn-Bi avec des premières particules dures (40) pour former une base (24), dans lequel la base (24) inclut, en pourcentage massique(% massique) de la base (24), le cuivre en une quantité de 20,0 à 98,9 % massique, l'étain en une quantité de 0,1 à 15,0 % massique, le bismuth en une quantité de 0,1 à 8,0 % massique, et les premières particules dures (40) en une quantité de 0,2 à 5,0 % massique ;
de disposition de la base (24) sur un support (22) ;
de frittage de la base (24) et du support (22) ; et
de disposition d'un surdépôt d'étain (26) sur la base (24), dans lequel ledit surdépôt d'étain (26) inclut, en % massique du surdépôt d'étain (26), de l'étain en une quantité d'au moins 50,0 % massique, du cuivre en une quantité de 1,0 à 10,0 % massique et du nickel en une quantité allant jusqu'à 10,0 % massique.

FIG. 1

FIG. 1A

FIG. 2

**FIG. 3**

34
26
44
42
24
22
20
34

**FIG. 4**

26
42
40
24
36
38
22

**FIG. 5**

26
44
42
40
38
36
24
22

**FIG. 11**

**FIG. 12**

FIG. 13

FIG. 14

**FIG. 15**

**FIG. 16**

FIG. 17

keV

FIG. 18

FIG. 19

FIG. 20

FIG. 21

FIG. 22

FIG. 23

2.5 microns

Channels

FIG. 24

FIG. 25

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61414471 A
- US 61491568 B
- US 6746154 B
- WO 2009017501 A